Europäisches Patentamt

European Patent Office

Office européen des brevets

(19)

(11) Numéro de publication : **0 258 140 B1**

(12) **FASCICULE DE BREVET EUROPEEN**

(45) Date de publication du fascicule du brevet :
13.03.91 Bulletin 91/11

(21) Numéro de dépôt : 87401907.8

(22) Date de dépôt : 19.08.87

(51) Int. Cl.⁵ : **G21C 13/02**

(54) **Radier pour enceinte de confinement de réacteur nucléaire.**

(30) Priorité : 21.08.86 FR 8611946

(43) Date de publication de la demande :
02.03.88 Bulletin 88/09

(45) Mention de la délivrance du brevet :
13.03.91 Bulletin 91/11

(84) Etats contractants désignés :
**BE DE ES GB IT NL**

(56) Documents cités :
**EP-A- 0 128 801
CH-A- 544 382
DE-A- 3 111 645
US-A- 4 328 648**

(73) Titulaire : **FRAMATOME
Tour Fiat 1, Place de la Coupole
F-92400 Courbevoie (FR)**

(72) Inventeur : **Moreau, Philippe
32, rue Perronet
F-92200 Neuilly (FR)**

(74) Mandataire : **Mongrédien, André et al
c/o BREVATOME 25, rue de Ponthieu
F-75008 Paris (FR)**

EP 0 258 140 B1

## Description.

La présente invention a pour objet une nouvelle conception de radier pour enceinte de confinement de réacteur nucléaire.

Les enceintes de confinement utilisées dans l'industrie nucléaire se composent en principe d'un dôme qui surmonte une jupe cylindrique en appui sur un radier. Elles sont constituées d'une peau intérieure en acier doux qui a pour but d'assurer l'étanchéité, et qui est entourée d'une enveloppe de béton qui assure la résistance d'ensemble. Les sollicitations subies par les enceintes sont en effet nombreuses et importantes. Le radier supporte le poids des équipements et des structures internes, telles que la cuve, les générateurs de vapeur, le circuit primaire et les pompes. La jupe et le dôme doivent quant à eux subir les efforts classiques des constructions de génie civil, tels que ceux créés par le vent, et de plus doivent être dimensionnés aux événements catastrophiques tels que les séismes et les ruptures de circuit sous pression qui auraient pour effet l'établissement d'une surpression importante à l'intérieur de l'enceinte. Ce dernier événement en particulier obligerait l'enceinte de confinement à travailler en traction, ce qui n'est pas souhaitable dans le cas du béton. C'est pourquoi on emploie des familles de câbles de précontrainte qui sont disposés suivant des méridiens sur le dôme et descendent le long de la jupe cylindrique ; leurs extrémités sont fixées à la périphérie du radier.

Ce mode de précontrainte pose toutefois un problème important pour le radier lui-même, et ce problème est à l'origine de la présente invention. En effet, les câbles de précontrainte créent en transmettant la pression interne, en cas d'accident, un effort vertical ascendant à la périphérie du radier, tandis que le poids des diverses installations disposées sur ce radier est à l'origine d'efforts descendants appliqués pour leur plus grande part vers la périphérie de celui-ci. Il en résulte des efforts tranchants importants qu'il convient de reprendre à l'aide de béton armé précontraint. Le coût de la construction en est sensiblement augmenté. De plus, les efforts ainsi créés entraînent un gauchissement du radier qui tend à se soulever à sa périphérie, ce qui est à l'origine d'une perte de la cohésion du sol des fondations et d'une stabilité beaucoup moindre de l'enceinte de confinement. Avec des enceintes de confinement d'une cinquantaine de mètres de diamètre, le gauchissement peut être assez important pour justifier l'établissement d'un second radier qui supporte les installations situées dans l'enceinte de confinement et qui est disposé au-dessus du premier radier et séparé de celui-ci par une couche de matériaux déformables. Cet état de fait est évidemment lui aussi à l'origine d'un renchérissement des coûts de construction.

Enfin, l'installation et la maintenance de l'extrémité des câbles de précontrainte nécessitent un volume de construction important que l'on gagne en creusant une couronne circulaire au-dessous du radier proprement dit. Le drainage de la partie du sol située à l'intérieur de cette couronne est alors beaucoup plus difficile.

Une amélioration de cette conception a été proposée dans le brevet français FR-A 2 290 005 déposé par la Société WESTINGHOUSE. D'après ce brevet, le radier est remplacé par une structure plus complexe comprenant une semelle horizontale inférieure, une deuxième semelle située au-dessus de la première et qui constitue le sol de l'enceinte de confinement, et un certain nombre de parois verticales qui délimitent l'espace entre les deux semelles et le compartimentent en locaux. Les têtes de câbles de précontrainte de la jupe et du dôme sont donc situés entre les deux semelles. Cette disposition permet de supprimer les difficultés de drainage qui étaient engendrées par la disposition d'une couronne inférieure annulaire autour du radier et de gagner beaucoup plus d'espace, mais les problèmes que l'on a évoqué ci-dessus concernant le mauvais travail du béton en flexion et en traction se posent toujours.

La présente invention a donc pour but de remédier aux inconvénients des radiers connus et notamment de réaliser un radier pour au moins une première enceinte de confinement de réacteur nucléaire à assise plane qui est sollicité dans des conditions bien meilleures à cause de la suppression des concentrations de contraintes et des sollicitations de traction.

L'invention a pour objet un radier comprenant une première semelle constituant le sol de l'enceinte, une seconde semelle horizontale en béton en assise sur le sol caractérisé en ce qu'il comprend deux groupes de plaques de béton planes ou tronconiques obliques, en appui sur la seconde semelle et supportant ladite première enceinte de confinement, les plaques d'un premier groupe étant inclinées vers l'intérieur de la seconde semelle, les plaques, précontraintes par des cables d'un deuxième groupe étant inclinées vers l'extérieur de la seconde semelle et disposées autour des plaques du premier groupe et en face d'elles.

Selon un mode préféré de réalisation de l'invention, le radier comprend des câbles de précontrainte disposés de manière rayonnante dans la seconde semelle, entre le centre de celle-ci et l'enceinte de confinement.

Une autre amélioration que l'on peut apporter à l'invention consiste à utiliser une seconde semelle qui s'étende vers l'extérieur au-delà de son périmètre de contact avec les plaques inclinées vers l'extérieur et qui soit munie de cerces de précontraintes disposées le long de son pourtour.

L'invention va à présent être décrite en commentant les dessins donnés en annexe, à titre illustratif et non limitatif et dont l'énumération illustratif et non limitatif et dont l'énumération est la suivante :

- la figure 1 représente une enceinte de confinement d'après l'art antérieur,

– la figure 2 représente une enceinte de confinement mais sans ses équipements internes selon un mode de réalisation de l'invention,

– la figure 3 représente un autre mode de réalisation de l'invention,

– la figure 4 représente un autre mode de réalisation de l'invention,

– les figures 5 et 6 représentent des coupes selon la ligne V-V de la figure 2, pour deux modes possibles de réalisation de l'invention.

Toutes ces figures représentent des coupes axiales d'enceintes de confinement supposées à symétrie de révolution autour de leur axe ZZ, ce qui est une construction usuelle à l'heure actuelle. Il est cependant évident que le cadre de l'invention n'est pas limité à des structures de révolution de section droite, mais peut également s'appliquer à des formes plus complexes.

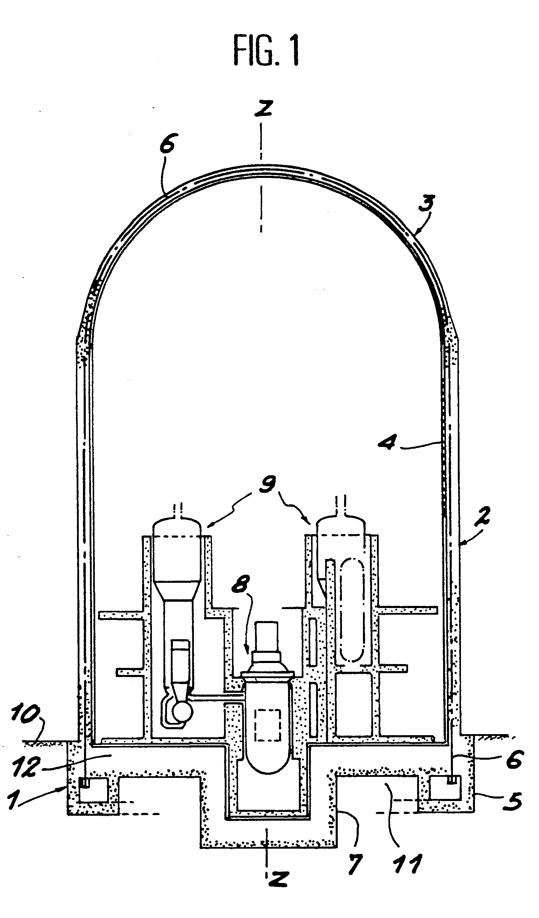

La figure 1 représente une enceinte de confinement formée de trois parties essentielles : le radier 1, la jupe 2 et la coupole 3. Chacune de ces parties est constituée d'une paroi de béton doublée d'un revêtement en acier doux 4 à l'intérieur qui permet d'assurer l'étanchéité de l'enceinte. Le radier 1 est de forme irrégulière et présente une couronne annulaire 5 disposée sur la face inférieure de son pourtour, et peut avoir un puits central 7 qui contient au moins une partie de la cuve 8. Le but de la couronne 5 est de loger les extrémités de câbles de précontrainte 6 avec une répartition angulaire généralement uniforme et qui parcourent l'ensemble de la jupe 2. Cette précontrainte explique que le radier 1, qui est par ailleurs soumis au poids de structures et d'équipements tels que la cuve 8 et les générateurs 9, est soumis à des efforts de flexion et de cisaillement importants, notamment dans sa partie 12 proche de la périphérie et de la jupe 2. L'épaisseur de béton doit donc être importante même si ce béton est armé ou précontraint. Une autre conséquence est que la partie 11 du sol 10 comprise à l'intérieur de la couronne 5 est peu accessible et que les opérations de drainage sont malaisées.

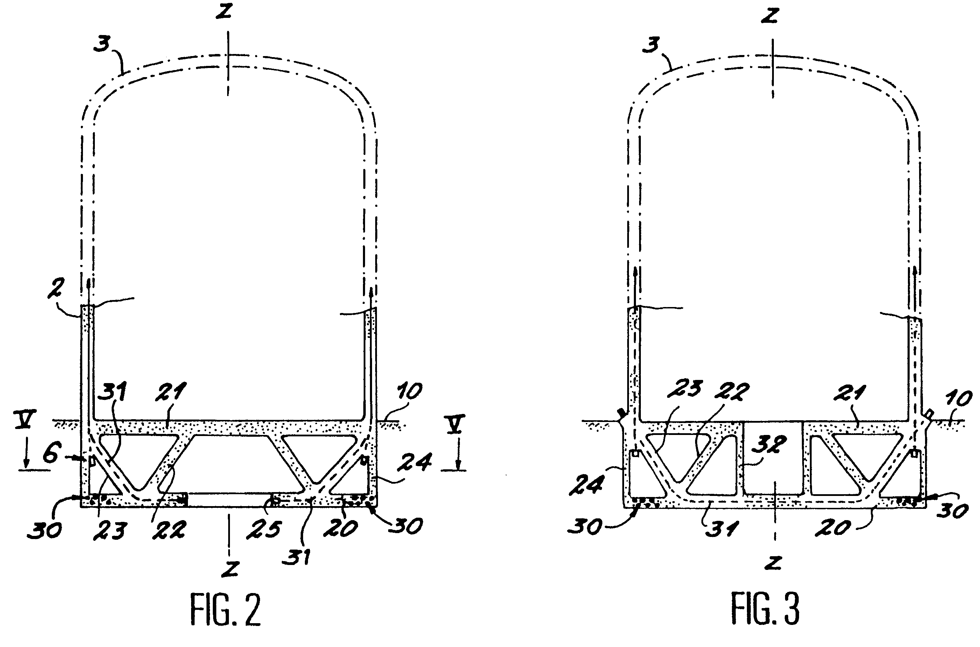

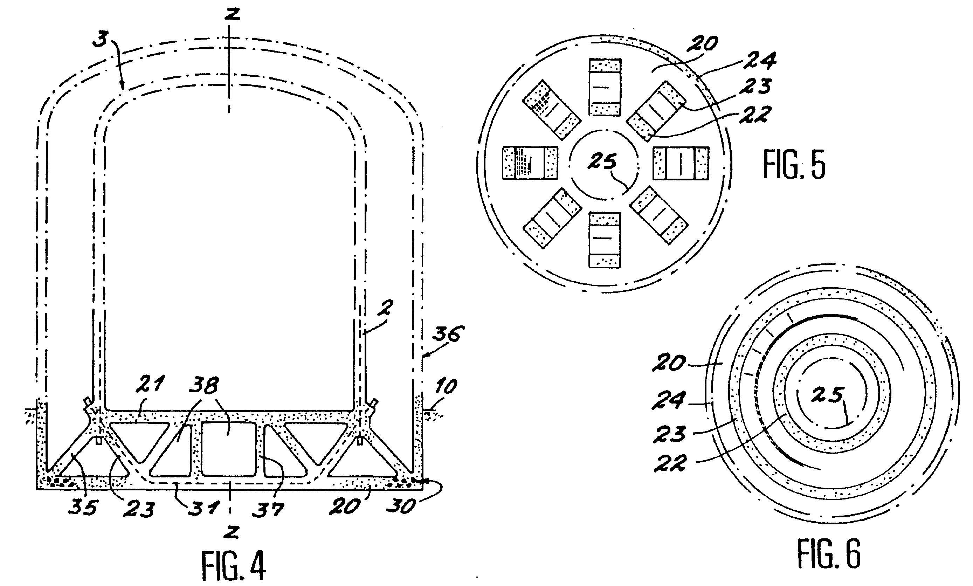

On se reporte maintenant à la figure 2 qui représente un mode de réalisation d'un radier d'enceinte de confinement d'après l'invention ; ce radier comprend de bas en haut une semelle 20 en forme de couronne ou circulaire à surface inférieure plane sur laquelle prennent appui des bielles 23 et des butons 22. Il s'agit de plaques de béton de forme plane ou tronconique inclinées vers le centre de la semelle pour les butons 22, vers l'extérieur de la semelle pour les bielles 23 qui se raccordent à la jupe 2. Les bielles 23 sont toujours disposées en face de butons 2 et à l'extérieur de ceux-ci suivant une disposition régulière le long de la couronne 20, qui peut être discontinue comme le montre la figure 5, ou encore continue comme le montre la figure 6. D'après la représentation de la figure 2, le buton 22 et la bielle 23 ont une intersection commune avec la semelle 20, ce qui n'est pas une condition de réalisation nécessaire dans l'invention, mais présente néanmoins l'avantage de conduire à des sollicitations plus homogènes sur la semelle 20. On a encore représenté ici une paroi extérieure 24 qui peut être incorporée à l'installation de façon à limiter la fouille autour du radier de l'enceinte de confinement.

Les efforts auxquels est soumise cette structure peuvent être résumés comme suit : les câbles de précontrainte 6, en transmettant la pression interne en cas d'accident, créent comme dans les solutions antérieures une force verticale ascendante répartie sur le pourtour du sol de l'enceinte de confinement 21, alors que le poids des diverses installations de l'enceinte de confinement exerce sous forme d'une pression sur le sol 21 principalement à l'intérieur de l'intersection avec les butons 22. Il en résulte des sollicitations de flexion le long du sol 21, principalement sur la partie en porte-à-faux entre les câbles de précontrainte 6 et les divers poids, c'est-à-dire essentiellement la partie du sol 21 comprise entre les appuis des butons 22 et des bielles 23. La longueur de ce porte-à-faux est cependant, d'après l'invention, suffisamment faible pour ne pas engendrer de déformation excessive du béton. Par contre les autres parties de la structure ne sont pas soumises à de la flexion : les butons 22 sont comprimés et les bielles 23 sont également comprimées grâce à la précontrainte réalisée par les câbles 31. Les composantes verticales de ces efforts tendent à s'équilibrer sur la semelle 20 qui n'est donc pas fléchie non plus pour peu que les butons 2 et les bielles 23 possèdent une intersection commune avec cette semelle 20. La surface de contact de la semelle 20 et du sol 10 n'est ainsi pas modifiée, ce qui permet de garantir la cohésion de ce sol 10 et la stabilité de l'ensemble de confinement.

Comme les efforts de traction sont indésirables dans du béton, il est ainsi possible de précontraindre la semelle 20 ainsi que les bielles 23. C'est ce que représente le mode de réalisation de la figure 3. Des cerces de précontrainte 30 sont intallées sur le pourtour extérieur de la semelle 20, alors que des câbles de précontrainte rayonnants 31 sont disposés le long des bielles 23 et de la semelle 20 ; ces câbles de précontrainte peuvent s'étendre sur tout un diamètre de la semelle 20 et sur deux bielles opposées 23 ; dans le cas, représenté figure 2, d'une semelle 20 en forme de couronne, les câbles de précontrainte 31 sont bien entendu plus courts et comportent alors une extrémité sur le contour intérieur 25 de la semelle 20.

La figure 3 représente, selon un autre mode de réalisation, un puits central, disposé entre la semelle 20 et le sol 21 de l'enceinte de confinement, délimité par des parois verticales circulaires de béton 32 et débouchant dans l'enceinte de confinement. Ce puits peut contenir la cuve du réacteur. Un tel aménagement est connu en soi et a d'ailleurs été représenté figure 1 ; cependant, avec la forme de radier caractéristique de l'invention, les parois 32 de ce puits ne sont pas soumises à de fortes sollicitations mécaniques et ne sont pas en contact avec le sol 10. On peut donc se permettre de les dimensionner beaucoup plus légèrement. En outre la semelle 20 est horizontale, ce qui permet des travaux de terrassement plus simples.

On se reporte maintenant à la figure 4 qui représente un autre mode possible de réalisation de l'invention : ici la semelle 20 déborde largement vers l'extérieur de l'enceinte de confinement et peut porter une seconde enceinte de confinement extérieure 36 dans laquelle la première enceinte de confinement, délimitée en particulier par la jupe, le dôme 3 et le sol 21, est entièrement incluse. Il est alors possible et avantageux d'installer une nouvelle rangée de butons 35 dits butons externes, qui sont en contact par leur extrémité inférieure avec la semelle 20 et sont placés de préférence à l'intersection de la semelle 20 et la deuxième enceinte de confinement 36, et par leur extrémité supérieure à l'intersection des bielles 23 et du sol 21 de l'enceinte de confinement. Ces butons externes 35 permettent une meilleure répartition des efforts et une stabilité accrue de l'installation.

D'après la figure 4, l'espace compris entre la semelle 20, le sol 21 de l'enceinte de confinement et les butons 22 a été compartimenté au moyen de cloisons verticales 37 pour former des locaux 38. Cette disposition permet évidemment de gagner un espace important au profit de divers matériels et installations.

Il doit rester présent à l'esprit que les modes de réalisation décrits ci-dessus sont des exemples, et que leurs différentes caractéristiques : la précontrainte de la semelle 20 et des bielles 23, la création d'un puits central, le compartimentage en locaux 38, la mise en place de butons externes 35, et la mise en place d'une deuxième enceinte de confinement sont indépendantes et peuvent donc être combinés différemment.

Les avantages du radier selon l'invention sont donc les suivants :
– une meilleure répartition des efforts dans la structure du radier,
– une semelle 20 de conception simple puisque horizontale et qui n'est pas soumise à la flexion, ce qui entraîne une meilleure assise de l'installation sur le sol 10.

L'utilisation plus rationnelle de la matière permet de réaliser des gains de poids importants. Les précontraintes que l'on peut être amené à établir concernent des zones périphériques et faciles d'accès et ne posent donc pas de grandes difficultés d'installation. L'espace compris entre la semelle 20 et le sol 21 de l'enceinte de confinement peut être avantageusement occupé par des locaux d'aménagement. Leur disposition souterraine permet d'y loger des équipements sensibles. Enfin, il est possible d'ajouter sans trop de complications une deuxième enceinte 36 qui peut être à une certaine distance de la première grâce à l'emploi de butons externes 35.

## Revendications

1. Radier pour au moins une première enceinte de confinement de réacteur nucléaire comprenant une première semelle (21) constituant le sol de l'enceinte, l'enceinte comprenant une jupe (2) se raccordant au radier, une seconde semelle horizontale (20) en béton en assise sur le sol (11) caractérisé en ce qu'il comprend deux groupes de plaques (22 et 23) en béton planes ou tronconiques obliques, en appui sur la seconde semelle (20) et supportant ladite première enceinte de confinement, les plaques (22) d'un premier groupe étant inclinées vers l'intérieur de la seconde semelle, les plaques (23), précontraintes par des câbles (31), d'un deuxième groupe étant inclinées vers l'extérieur de la seconde semelle (20), disposées autour des plaques (22) du premier groupe et en face d'elles et se raccordant à la jupe (2).

2. Radier pour enceinte de confinement de réacteur nucléaire selon la revendication 1, caractérisé en ce qu'il comprend les câbles de précontrainte (31) disposés de manière rayonnante dans la seconde semelle (20), entre le centre de celle-ci et l'enceinte de confinement.

3. Radier pour enceinte de confinement de réacteur nucléaire selon l'une quelconque des revendications 1 ou 2, caractérisé en ce que la seconde semelle (20) s'étend, vers l'extérieur, au-delà du périmètre de contact de la seconde semelle (20) avec les plaques (23) inclinées vers l'extérieur.

4. Radier pour enceinte de confinement de réacteur nucléaire selon la revendication 3, caractérisé en ce qu'il comprend des cerces de précontrainte (30) disposées le long du périmètre de la seconde semelle (20).

5. Radier pour enceinte de confinement de réacteur nucléaire selon l'une quelconque des revendications 3 ou 4, caractérisé en ce qu'une seconde enceinte de confinement (36), qui enferme la première, est disposée sur la seconde semelle (20).

6. Radier pour enceinte de confinement de réacteur nucléaire selon l'une quelconque des revendications 3 à 5, caractérisé en ce qu'il comprend un autre groupe de plaques (35) de béton planes ou tronconiques obliques, en appui sur la seconde semelle (20) et supportant ladite première enceinte de confinement, inclinées vers l'intérieur de la seconde semelle (20) et disposées autour des plaques (23) inclinées vers l'extérieur.

7. Radier pour enceinte de confinement de réacteur nucléaire selon l'une quelconque des revendications 1 à 6, caractérisé en ce qu'il comprend des cloisons (37) de béton pour compartimenter en locaux (8) au moins une partie de l'espace délimité par les plaques (22, 23, 35) et les deux semelles (20, 21).

8. Radier pour enceinte de confinement de réacteur nucléaire selon l'une quelconque des revendications 1 à 7, caractérisé en ce qu'il comprend un puits situé entre les plaques du premier groupe (22), délimité par une paroi de béton (32) entre la seconde semelle (20) et la première enceinte de confinement, ouvert sur celle-ci et pouvant contenir au moins une partie de la cuve du réacteur.

## Ansprüche

1. Fundament für mindestens einen ersten Sicherheitsbehälter eines Kernreaktors mit einem eine erste Sohlplatte (21) bildenden Behälterboden, wobei der Behälter einen sich an das Fundament anschließenden Mantel (2) und eine zweite horizontale Sohlplatte (20) aus Beton aufweist, die auf dem Erdboden (11) sitzt, dadurch **gekennzeichnet,** daß zwei Gruppen ebener oder schräg kegelstumpfförmiger Betonplatten (22 und 23) auf der zweiten Sohlplatte (20) aufliegen und den ersten Sicherheitsbehälter tragen, wobei die Platten (22) einer ersten Gruppe zum Innern der zweiten Sohlplatte hin geneigt sind und die durch Kabel (31) vorgespannten Platten (23) einer zweiten Gruppe zum Äußeren der zweiten Sohlplatte (20) hin geneigt und um die Platten (22) der ersten Gruppe herum und diesen gegenüberliegend angeordnet sind und sich an den Mantel (2) anschließen.

2. Fundament für Kernreaktor-Sicherheitsbehälter nach Anspruch 1, dadurch gekennzeichnet, daß die Vorspannungskabel (31) radial in der zweiten Sohlplatte (20) zwischen der Mitte und dem Sicherheitsbehälter angeordnet sind.

3. Fundament für Kernreaktor-Sicherheitsbehälter nach Anspruch 1 oder 2, dadurch gekennzeichnet, daß die zweite Sohlplatte (20) sich über ihre Begrenzungslinie mit den nach außen geneigten Platten (23) hinaus nach außen erstrecht.

4. Fundament für Kernreaktor-Sicherheitsbehälter nach Anspruch 3, dadurch gekennzeichnet, daß Vorspannungsbewehrungen (30) entlang des Umfangs der zweiten Sohlplatte (20) angeordnet sind.

5. Fundament für Kernreaktor-Sicherheitsbehälter nach Anspruch 3 oder 4, dadurch gekennzeichnet, daß ein zweiter Sicherheitsbehälter (36), der den ersten umschließt, auf der zweiten Sohlplatte (20) angeordnet ist.

6. Fundament für Kernreaktor-Sicherheitsbehälter nach einem der Ansprüche 3 bis 5, dadurch gekennzeichnet, daß eine weitere Plattengruppe (35) aus ebenen oder schrägwinkligen Betonplatten vorgesehen ist, die auf der zweiten Sohlplatte (20) aufliegen und den ersten Sicherheitsbehälter abstützen, wobei sie zum Inneren der zweiten Sohlplatte (20) hin geneigt sind und um die nach außen geneigten Platten (23) herum angeordnet sind.

7. Fundament für Kernreaktor-Sicherheitsbehälter nach einem der Ansprüche 1 bis 6, dadurch gekennzeichnet, daß es Zwischenwände (37) aus Beton zur Abtrennung von Räumen (38) in mindestens einen Teil des Raumes aufweist, der durch die Platten (22, 23, 35) und die beiden Sohlplatten (20) begrenzt ist.

8. Fundament für Kernreaktor-Sicherheitsbehälter nach einem der Ansprüche 1 bis 7, dadurch gekennzeichnet, daß es einen Schacht zwischen den Platten der ersten Gruppe (22) aufweist, der durch eine Betonwandung (32) zwischen der zweiten Sohlplatte (20) und dem ersten Sicherheitsbehälter begrenzt wird, zu diesem hin offen ist und mindestens einen Teil der Reaktorwanne enthält.

## Claims

1. Foundation for a nuclear reactor confinement enclosure comprising a first footing (21), constituting the base or floor of the enclosure, which has a skirt (32) connected to the foundation and a second horizontal footing (20) made from concrete and bedded on the floor (11), characterized in that it comprises two groups of oblique truncated cone-shaped or planar concrete slabs (22, 23) bearing on the second footing (20) and supporting a first confinement enclosure, the slabs (22) of a first group being inclined towards the inside of the second footing, the slabs (23), prestressed by cables (31), of a second group being inclined towards the outside of the second footing (20), disposed around the slabs (22) of the first group and facing the same and connected to the skirt (22).

2. Foundation for a nuclear reactor confinement enclosure according to claim 1, characterized in that it comprises prestressing cables (31) arranged in radiating manner in the second footing (20), between the centre of the latter and the confinement enclosure.

3. Foundation for a nuclear reactor confinement enclosure according to either of the claims 1 or 2, characterized in that the second footing (20) extends towards the outside beyond the contact perimeter of the second footing (20) with the outwardly inclined slabs (23).

4. Foundation for a nuclear reactor confinement enclosure according to claim 3, characterized in that it comprises prestressing hoops (30) arranged along the perimeter of the second footing (20).

5. Foundation for a nuclear reactor confinement enclosure according to either of the claims 3 and 4, characterized in that a second confinement enclosure (36), which surrounds the first, is placed on the second footing (20).

6. Foundation for a nuclear reactor confinement enclosure according to any one the claims 3 to 5, characterized in that it also comprises a group of oblique truncated cone-shaped or planar concrete slabs (35) bearing on the second footing (20) and supporting the first confinement enclosure, which are inclined towards the outside of the second footing (20) and are located around the outwardly inclined slabs (23).

7. Foundation for a nuclear reactor confinement enclosure according to any one of the claims 1 to 6, characterized in that it comprises concrete partitions (37) for compartmentalizing into zones or rooms (38) at least part of the space defined by the slabs (22, 23, 35) and the two footings (20, 21).

8. foundation for a nuclear reactor confinement enclosure according to any one of the claims 1 to 7, characterized in that it comprises a shaft located between the slabs of the first group (22), defined by a concrete wall (32) between the footing (20) and the first confinement enclosure, open onto the latter and able to contain at least part of the reactor vessel.

# FIG. 1

FIG. 3

FIG. 2

FIG. 4

FIG. 5

FIG. 6

EP 0 258 140 B1